(19) Europäisches Patentamt

European Patent Office

Office européen des brevets

(11) **EP 1 232 322 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(21) Anmeldenummer: **00984830.0**

(22) Anmeldetag: **10.10.2000**

(51) Int Cl.$^7$: **E21B 17/042**, F16L 15/06

(86) Internationale Anmeldenummer:
**PCT/DE00/03617**

(87) Internationale Veröffentlichungsnummer:
**WO 01/034936 (17.05.2001 Gazette 2001/20)**

(54) **ROHRVERBINDUNG**

TUBE CONNECTION

RACCORD POUR TUYAUX

(84) Benannte Vertragsstaaten:
**AT BE CH CY DE DK ES FI FR GB GR IE IT LI LU MC NL PT SE**

(30) Priorität: **10.11.1999 DE 19955377**

(43) Veröffentlichungstag der Anmeldung:
**21.08.2002 Patentblatt 2002/34**

(73) Patentinhaber: **VALLOUREC MANNESMANN OIL & GAS GERMANY GMBH**
**40472 Düsseldorf (DE)**

(72) Erfinder:
• **KRUG, Gerhard**
**47259 Duisburg (DE)**

• **LENZE, Friedrich**
**40885 Ratingen (DE)**
• **QUADFLIEG, Erich**
**47800 Krefeld (DE)**

(74) Vertreter: **Meissner, Peter E., Dipl.-Ing.**
**Meissner & Meissner,**
**Patentanwaltsbüro,**
**Hohenzollerndamm 89**
**14199 Berlin (DE)**

(56) Entgegenhaltungen:
**WO-A-96/03605        DE-A- 3 245 819**

**Beschreibung**

Die Erfindung betrifft eine Rohrverbindung mit einem Zapfen- und einem Muffenelement gemäß dem Oberbegriff des Patentanspruches 1.

Offshore-Bohrungen nach Gas werden in immer größere Wassertiefen niedergebracht, die höhere Lagerstättendrücke haben. Diese Bohrungen müssen gepflegt und repariert werden. Dafür sind jedoch keine zufriedenstellenden Werkzeuge d. h. zu einem Strang verschraubbare Spezialrohre, am Markt vorhanden. Die veränderte Bohrtätigkeit verlangt ein Werkzeug mit einer Rohrverbindung, die den Anforderungen an

- hohe Innendruckfestigkeit und Gasdichtheit,
- unempfindliche, robuste Ausführung für grobe Handhabung und vielfach wiederholte Anwendung desselben Werkzeuges,
- Vielfachverschraubung ohne Verlust der Dichtfunktion,
- Hohe Verschraubmomente und damit hohe Vorspannungen gegen Biegewechselbeanspruchung bzw. hohe Drehmomente für Workover-Arbeiten,
- leichter und schneller Ein- und Ausbau,
- leichte und kostengünstige Reparaturmöglichkeit.

genügen.

Gegenwärtig werden Offshore/Workover-Arbeiten mit größeren, gasdichten Tubing-Gewindeverbindungen durchgeführt, die geeignet sind, die hohen Gas-Innendrücke zu halten, jedoch wegen der geringen Wiederverschraubbarkeit stark reparaturanfällig sind und so nur wenige Male benutzt werden können, d. h. hohe Kosten verursachen. Außerdem sind solche Verbindungen nicht für die bei Offshore/Workover-Arbeiten zwangsläufigen Biegewechselbeanspruchungen durch Wellengang, Strömung oder Strudel-Vibrationen konstruiert, so daß wegen der geringen Biegewechselfestigkeit eine Wiederverwendbarkeit stark begrenzt ist.

Ebenfalls angewendet werden können Flanschverbindungen, die jedoch hohen zeitlichen Aufwand beim Ein- und Ausbau erfordern und deswegen hohe Kosten verursachen.

Für die gestellten Anforderungen würde sich im allgemeinen ein besonders ausgeführter Bohrgestängeverbinder eignen, insbesondere mit Innen- und Außenschulter, da durch die Konstruktion mit Doppelstoß hohe Verschraub- und damit auch hohe Arbeitsdrehmomente aufgenommen werden können. Die Bohrgestängeverbindung ist jedoch durchlässig gegen höhere Gasdrücke. Es ist bekannt, daß mit Hilfe eines zusätzlichen Dichtringes aus z. B. Teflon-Material eine Abdichtung gegen Gasinnendruck erfolgen kann. Diese Abdichtung ist jedoch beschränkt wiederverwendbar und nur für niedrige Drücke geeignet (siehe Firmenprospekt - Mannesmann OCTG - "Premium Test Drill Pipe for high pressure oil and gas wells" No. 2/89).

Eine gattungsbildende Rohrverbindung ist aus der WO 96/03605 bekannt. Diese als Bohrgestänge verwendete Rohrverbindung besteht aus einem Zapfenelement, das einen zwischen einer äußeren Schulter und einer Zapfenstirnfläche angeordneten kegeligen Außengewindeabschnitt und einen zwischen der äußeren Schulter und dem Außengewindeabschnitt sowie einen zwischen dem Außengewindeabschnitt und der Zapfenstirnfläche angeordneten gewindefreien Abschnitt aufweist und mit einem mit dem Zapfenelement verschraubbaren Muffenelement, das einen zwischen einer inneren Schulter und einer Muffenstirnfläche angeordneten kegeligen Innengewindeabschnitt und einen zwischen der inneren Schulter und dem Innengewindeabschnitt sowie einen zwischen dem Innengewindeabschnitt und der Muffenstirnfläche angeordneten gewindefreien Abschnitt aufweist, wobei die im verschraubten Zustand einander gegenüberliegenden gewindefreien Abschnitte im Bereich der äußeren Schulter länger sind als die im Bereich der inneren Schulter liegenden gewindefreien Abschnitte des Zapfen- und des Muffenelementes. Die bei der Verschraubung mit der Muffenstirnfläche in Kontakt tretende äußere Schulter bildet die Primärschulter.

Eine vergleichbare Rohrverbindung ist in der DE 32 45 819 B1 offenbart. Diese ebenfalls als Bohrgestängeverbinder ausgebildete Rohrverbindung weist die gleichen Merkmale wie die zuvor beschriebene Rohrverbindung auf, wobei auch bei dieser Konstruktion die Außenschulter die Primärschulter bildet, die beim Verschrauben zuerst aktiviert wird. Die Länge der im Bereich der Außenschulter liegenden gewindefreien Abschnitte ist ebenfalls größer als die der im Bereich der Innenschulter liegenen gewindefreien Abschnitte. Weiterhin wird vorgeschlagen, den Abstand von der Muffenstirnfläche bis zur inneren Schulter größer zu wählen, als den Abstand von der Zapfenstirnfläche zur äußeren Schulter. Dadurch wird ein Spalt erzeugt, wenn beim Zusammenschrauben von Hand die Muffenstirnfläche an der äußeren Schulter zur Anlage kommt.

Beide bekannten Rohrverbindungen genügen nicht den besonderen Anforderungen, die an Rohrverbindungen für Offshore/Workover-Arbeiten gestellt werden müssen.

Aufgabe der Erfindung ist es, die bekannte Rohrverbindung mit Doppelstoß so weiterzuentwickeln, daß sie den besonderen Anforderungen für Offshore/Workover-Arbeiten genügt. Die besonderen Anforderungen sind hohe Gasdichtheit mit Innendrücken > 10.000 ps (689475(7 Pascal) hohe Widerstandskraft gegen Biegewechselbeanspruchung, Robustheit in der Handhabung und häufige Wiederverwendbarkeit ohne Beeinträchtigung der Dichtheit, sowie schneller Ein- und Ausbau und leichte und kostengünstige Reparierbarkeit.

Diese Aufgabe wird ausgehend vom Oberbegriff in Verbindung mit den kennzeichnenden Merkmalen des Patentanspruches 1 gelöst. Vorteilhafte Weiterbildungen sind jeweils Gegenstand von Unteransprüchen.

Zur Aufnahme der geforderten hohen Drehmomente werden in bekannter Weise der übliche Außen- und Innenstoß herangezogen. Um die Belastung des sekundär wirksamen Innenstoßes zusätzlich zu begrenzen, wurde ein langer gewindefreier Abschnitt des Zapfenelementes konstruiert, welches ein Element der metallischen Abdichtung trägt. Im nachfolgenden wird der gewindefreie Abschnitt des Zapfenelementes am Innenstoß mit Lippe bezeichnet. Die Länge der Lippe ist mindestens zweimal vorzugsweise bis dreimal so lang wie der gewindefreie Abschnitt an der Außenschulter. Dadurch wird bewirkt, daß mit ansteigendem Verschraubmoment die Außenschulter anteilig mehr belastet wird und in der Lippe die axialen Druckspannungen, welche die Innendruckbelastbarkeit herabsetzen, gering gehalten werden. Nachteilig wirkt sich jedoch aus, daß eine längere Lippe auf starke Durchbiegung belastet wird und damit die Funktion des Dichtsitzes gefährdet. Dieses Problem wird gelöst durch die Anordnung eines Stützkontaktes, wodurch die Durchbiegung auf ein unschädliches Maß reduziert wird. Im Muffenelement ist zur Erhöhung der Elastizität zwischen dem Gewinde- und dem Dichtbereich eine Nut vorgesehen, deren Funktion darin besteht, den Muffenkörper nicht im Sinne einer Entlastungsnut durch Abbau von Spannungsspitzen zu entlasten, sondern primär diesen Bereich elastischer zu machen, um die Kompression in der Lippe zu reduzieren. Gleichzeitig dient diese Nut der Aufnahme von überschüssigem Verschraubfett aus dem Gewinde, welches dort gesammelt werden kann, ohne auf das Dichtsystem einen schädlichen Druck auszuüben. Die Dimensionierung der Nut berücksichtigt außerdem die Benutzung von Mehrzahnstrehlern für die wirtschaftliche Herstellung des Gewindes.

Durch eine geeignete Wahl der Radien der ballig ausgebildeten Kontaktflächen im Muffenelement sowie durch Optimierung der wechselseitig beeinflußten Abstände des Dichtsitzes von der Stoßfläche und von der Lage des Stützkontaktes wird erreicht, daß im Dichtsitz eine genügend große und von den Fertigungstoleranzen der Überdeckung sowie der Längendifferenz von Zapfen- und Muffenelement möglichst unabhängige konstante Flächenpressung erzeugt wird und die Schwankungen im Stützkontakt aufgefangen werden. Die ballig ausgebildeten Kontaktflächen können alternativ auch im der Innenschulter zugewandten gewindefreien Abschnitt des Zapfenelementes angeordnet sein, wobei dann der damit zusammenwirkende gewindefreie Abschnitt des Muffenelementes als gerade geneigte Fläche ausgebildet ist.

Die Berechnungen und Analysen haben ergeben, daß bei folgenden Verhältnissen der relevanten Parameter die gewünschten Ergebnisse erreicht werden.

$$R_D = \text{mind. } 1{,}25 \times R_L$$

$$R_S = \text{ca. } 2 \times R_D$$

$R_D$ = Radius der Dichtkontaktfläche
$R_L$ = mittlerer Radius der Dichtlippe
$R_S$ = Radius der Stützkontaktfläche

$$U_D = z1 \times R_L \times \frac{\sigma 0{,}2}{E} \qquad (z1 = 1{,}6 \ldots 2{,}4)$$

$$U_S = z2 \times U_D \qquad (z2 = 0{,}5 \ldots 0{,}7)$$

$U_D$ = Übermaß in der Dichtkontaktfläche
$\sigma\, 0{,}2$ = Streckgrenze
$E$ = Elastizitätsmodul
$U_S$ = Übermaß in der Stützkontaktfläche

$$L_{ID} = z3 \times U_D \times \sqrt{\frac{R_L}{S_L}} \qquad (z3 = 1{,}2 \ldots 1{,}5)$$

$L_{ID}$ = Abstand Innenschulter - Dichtsitz
$S_L$ = mittlere Lippendicke

$$L_{DS} = z4 \times \sqrt{R_L \times S_L} \qquad (z4 = 0{,}5 \ldots 0{,}8)$$

$L_{DS}$ = Abstand Dichtsitz - Stützkontakt

$$L_{SG} = z5 \times L_{DS} \qquad (z5 = 1{,}5 \ldots 2{,}0)$$

$L_{SG}$ = Abstand Stützkontakt - Gewindeeinlauf

Den Berechnungen liegt ferner zugrunde, daß das in den Gewindeabschnitten erzeugte Gewinde zur Reduzierung der Radialkomponente infolge von Axiallasten eine steilere Lastflanke als vergleichbare Gewinde (z. B. API) von 15-20° (vorzugsweise 18°) aufweist und eine Gewindesteigung von 2,5-4 Gang / Zoll (vorzugsweise 3 Gang / Zoll) sowie einen Kegel von 1:4 bis 1:8 (vorzugsweise 1:6) hat. Der Dichtkegel soll 1:3 bis 1:5 (vorzugsweise 1:4) betragen. Die große Gewindesteigung und der steile Dichtkegel führen zu kurzem Reibweg während des Ver- und Entschraubens und damit zu geringem Verschleiß.

Nach einem weiteren Merkmal der Erfindung ist die innere Schulter als 90°-Schulter ausgebildet. Dies hat den Vorteil, daß bei Kompression das Entstehen von Radialkräften vermieden wird, was sich ungünstig auf das Dichtsystem auswirken würde.

In der Zeichnung wird anhand eines Ausführungsbeispieles die erfindungsgemäß ausgebildete Rohrverbindung näher erläutert. Es zeigt:

Fig. 1 a     im halbseitigen Längsschnitt ein erfindungsgemäß ausgebildetes Muffenelement,

Fig. 1b     im halbseitigen Längsschnitt ein erfindungsgemäß ausgebildetes Zapfenelement und

Fig. 2     im vergrößeren Maßstab die erfindungsgemäß ausgebildete Gewindeform.

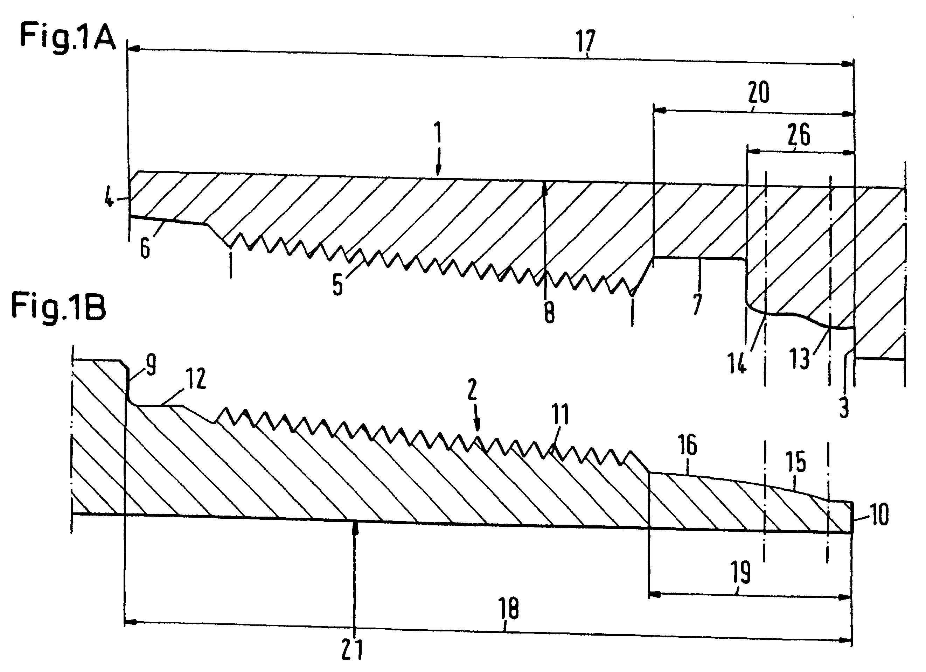

In Figur 1a ist in einem halbseitigen Längsschnitt ein erfindungsgemäß ausgebildetes Muffenelement 1 und in Figur 1b ein erfindungsgemäß ausgebildetes Zapfenelement 2 dargestellt. Das Muffenelement 1 weist einen zwischen einer inneren Schulter 3 und einer Muffenstirnfläche 4 liegenden kegeligen Innengewindeabschnitt 5 auf. Zwischen dem Anfang des Innengewindeabschnittes 5 und der Muffenstirnfläche 4 ist ein kegelig gewindefreier Abschnitt 6 angeordnet. Der zweite gewindefreie Abschnitt 20 des Muffenelementes 1 befindet sich zwischen dem Ende des Innengewindeabschnittes 5 und der inneren Schulter 3. Der äußere Durchmesser des Muffenelementes 1 ist mit einem Pfeil 8 gekennzeichnet. Das mit dem Muffenelement 1 verschraubbare erfindungsgemäß ausgebildete Zapfenelement 2 weist einen zwischen einer äußeren Schulter 9 und einer Zapfenstirnfläche 10 liegenden Außengewindeabschnitt 11 auf. Zwischen dem Ende des Außengewindeabschnittes 11 und der äußeren Schulter 9 befindet sich ein zylindrisch ausgebildeter gewindefreier Abschnitt 12 und der zweite gewindefreie Abschnitt 19 des Zapfenelementes 2 befindet sich zwischen dem Anfang des Außengewindeabschnittes 11 und der Zapfenstirnfläche 10.

Erfindungsgemäß ist der zweite gewindefreie Abschnitt 20 des Muffenelementes 1 unterteilt in einen Dichtteil 26 und in eine Nut 7, die sich vom Ende des Innengewindeabschnittes 5 bis zum Anfang des Dichtteiles 26 erstreckt. Im Dichtteil 26 sind zwei ballig konturierte Kontaktflächen 13, 14 angeordnet. Die der inneren Schulter 3 näherliegende Kontaktfläche 13 ist als Dichtsitz und die weiter entfernt liegende Kontaktfläche 14 als Stützkontakt ausgebildet. Dichtsitz 13 und Stützkontakt 14 wirken bei der Verschraubung zusammen mit einer im gewindefreien Abschnitt 19 des Zapfenelementes 2 angeordneten geraden Kegelfläche 15. Die Neigung dieser Kegelfläche 15 wird steil gewählt und liegt vorzugsweise bei 1 : 4. In Richtung Außengewindeabschnitt 11 geht sie über in eine zweite Kegelfläche 16, die flacher geneigt und vorzugsweise eine Neigung von 1 : 6 aufweist. Aufgrund des Neigungsunterschieds dient die Übergangsfläche 16 als Schutz des Dichtsitzes vor Beschädigungen. Die Neigung der Übergangskegelfläche 16 entspricht vorzugsweise auch der Neigung des Innengewindeabschnittes 5 und des Außengewindeabschnittes 11.

Die äußere Schulter 9 des Zapfenelementes 2 bildet die Primärschulter, die beim Kraftverschrauben als erste aktiviert wird. Dies wird dadurch erreicht, daß der Abstand 17 zwischen der inneren Schulter 3 und der Muffenstirnfläche größer ist als der Abstand 18 zwischen der äußeren Schulter 9 und der Zapfenstirnfläche 10. Ein weiteres wesentliches Kennzeichen der erfindungsgemäß ausgebildeten Rohrverbindung ist, daß die Länge des gewindefreien Abschnittes 19 des Zapfenelementes 2 im Bereich des Innenstoßes mindestens zweimal so groß ist wie die Länge des gewindefreien Abschnittes 6 des Muffenelementes 1 im Bereich des Außenstoßes. Der Innendurchmesser des Zapfenelementes 2 ist mit einem Pfeil 21 gekennzeichnet.

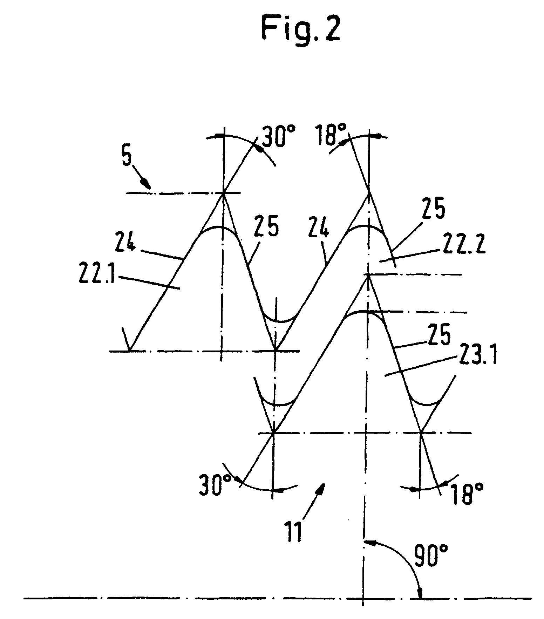

In Figur 2 ist in einem vergrößerten Maßstab die erfindungsgemäß ausgebildete Gewindeform dargestellt. Der obere Teil der Figur 2 zeigt ausschnittsweise 1 ½-Zahn 22.1, 22.2 des Innengewindeabschnittes 5 des Muffenelementes 1. Der untere Teil zeigt ausschnittsweise einen Zahn 23.1 des Außengewindeabschnittes 11 des Zapfenelementes 2. Die Grundform beider Gewindeabschnitte 5, 11 ist ein grobes Rundgewinde, aufbauend auf API-Standard, das vorteilhaft ist für die notwendige häufige Verschraubung, die 100 mal und mehr betragen kann, und für das schnelle Einfädeln, das sogenannte "Stabbing" von Zapfenelement 2 und Muffenelement 1. Die Führungsflanke 24 weist analog dem API Rotary-Gewinde einen Winkel von 30° auf. Abweichend von API ist der Winkel der Lastflanke 25 steiler im Bereich von 15 bis 20° vorzugsweise von 18°. Dies gilt in gleicher Weise auch für die Zähne 23.1 des Außengewindeabschnittes 11 des Zapfenelementes 2.

**Patentansprüche**

1.    Rohrverbindung mit einem Zapfenelement, (2) das einen zwischen einer äußeren Schulter und einer Zapfenstimfläche (10) angeordneten kegeligen Außengewindeabschnitt und einen zwischen der äußeren Schulter und dem Außengewindeabschnitt sowie einen zwischen dem Außengewindeabschnitt und der Zapfenstirnfläche (10) angeordneten gewindefreien Abschnitt aufweist und mit einem mit dem Zapfenelement verschraubbaren Muffenelement, das ein zwischen einer inneren Schulter und einer Muffenstirnfläche (4) angeordneten kegeligen Innengewindeabschnitt und einen zwischen der äußeren Schulter und dem Innengewindeabschnitt sowie einen zwischen dem Innengewindeabschnitt und der Muffenstirnfläche (4) angeordneten gewindefreien Abschnitt aufweist, wobei die im verschraubten Zustand einander gegenüberliegenden gewindefreien Abschnitte des Zapfen- und Muffenelementes (1) im Bereich der inneren Schulter eine andere Länge aufweisen als die im Bereich der äußeren Schulter liegenden gewindefreien Abschnitte des Zapfen- und des Muffenelementes,
**dadurch gekennzeichnet,**
**daß** die bei der Verschraubung mit der Muffenstirnfläche (4) in Kontakt tretende äußere Schulter (9) des Zapfenelementes (2) die Primärschulter bildet und der Abstand (18) zwischen Zapfenstirnfläche (10) und äußerer Schulter (9) geringer ist als der Abstand (17) zwischen Muffenstirnfläche (4) und innerer Schulter (3) des Muffenelementes (1)

**daß** die im Bereich der inneren Schulter (3) bzw. Zapfenstirnfläche (10) sich befindenden gewindefreien Abschnitte (19,20) mindestens zweimal so lang sind wie die im Bereich der äußeren Schulter (9) bzw. Muffenstirnfläche (4) sich befindenden gewindefreien Abschnitte (6,12), wobei der gewindefreie Abschnitt (20) des Muffenelementes (1) eine Nut (7) und ein Dichtteil (26) aufweist und im verschraubten Zustand der der Zapfenstirnfläche (10) am nächsten liegende gewindefreie Bereich (15) des Zapfenelementes (2) mit dem Dichtteil (26) des Muffenelementes (1) in Kontakt tritt und eine metallische Dichtung bildet, wobei das Dichtteil (26) mit zwei axial voneinander beabstandeten Kontaktflächen (13,14) versehen ist, von denen die als Dichtsitz dienende Kontaktfläche (13) näher und die eine Stützwirkung ausübende zweite Kontaktfläche (14) weiter entfernt zur inneren Schulter (3) angeordnet sind und die zur Erhöhung der Elastizität angebrachte Nut (7) zwischen Gewindeabschnitt (5) und Dichtteil (26) angeordnet ist.

**2.** Rohrverbindung nach Anspruch 1,
dadurch gekennzeichnet,
daß die im Bereich der inneren Schulter (3) bzw. Zapfenstirnfläche (10) sich befindenden gewindefreien Abschnitte (19,20) dreimal so lang sind wie die im Bereich der äußeren Schulter (9) bzw. Muffenstirnfläche (4) sich befindenden gewindefreien Abschnitte (6,12).

**3.** Rohrverbindung nach Anspruch 1 und 2,
**dadurch gekennzeichnet,**
**daß** der Innen- (5) und der Außengewindeabschnitt (11) mit einem groben Standardgewinde versehen ist, dessen Lastflanke (25) einen Winkelbereich von 15 bis 20° und die Führungsflanke (24) einen Winkel von 30° aufweist.

**4.** Rohrverbindung nach Anspruch 3,
**dadurch gekennzeichnet,**
**daß** die Lastflanke (25) einen Winkel von 18° aufweist.

**5.** Rohrverbindung nach Anspruch 3 und 4,
**dadurch gekennzeichnet,**
**daß** die Gewindesteigung im Bereich zwischen 2,5-4 Gang/Zoll liegt.

**6.** Rohrverbindung nach Anspruch 5,
**dadurch gekennzeichnet,**
**daß** die Gewindesteigung 3 Gang/Zoll beträgt.

**7.** Rohrverbindung nach einem der Ansprüche 3 - 6,
**dadurch gekennzeichnet,**
**daß** der Kegel der Gewindeabschnitte (5,11) im Bereich zwischen 1:4 bis 1:8 liegt.

**8.** Rohrverbindung nach Anspruch 7,
**dadurch gekennzeichnet,**
**daß** der Kegel der Gewindeabschnitte (5,11) 1 : 6 beträgt.

**9.** Rohrverbindung nach einem der Ansprüche 1 bis 8,
**dadurch gekennzeichnet,**
**daß** das Zapfenelement (2) im gewindefreien Abschnitt (19) eine schräg verlaufende gerade Kontaktfläche und das Muffenelement (1) zwei damit zusammenwirkende konvex, ballig ausgebildete Kontaktflächen (13,14) aufweist.

**10.** Rohrverbindung nach Anspruch 9,
**dadurch gekennzeichnet,**
**daß** die Radien der ballig ausgebildeten Kontaktflächen (13,14) im Muffenelement (1) größer als der mittlere Radius der Lippe des Zapfenelementes (2) sind und der Radius der Dichtkontaktfläche (13) stets kleiner ist als der der Stützkontaktfläche (14), und folgende Bedingengen erfüllt sind:

$$R_D = \text{mind. } 1{,}25 \times R_L$$

$$R_S = \text{ca. } 2 \times R_D$$

$R_D$ = Radius der Dichtkontaktfläche
$R_L$ = mittlerer Radius der Dichtlippe
$R_S$ = Radius der Stützkontaktfläche

**11.** Rohrverbindung nach einem der Ansprüche 9 und 10,
**dadurch gekennzeichnet,**
**daß** das Übermaß in den Kontaktflächen (13,14) (Durchmesserdifferenz Muffenelement(1)-Zapfenelement(2)) vom Werkstoff abhängig ist, wobei das Übermaß in der Stützkontaktfläche (14) stets kleiner ist als das der Dichtkontaktfläche (13), und folgende Bedingungen erfüllt sind:

$$U_D = z1 \times R_L \times \frac{\sigma 0{,}2}{E} \qquad (z1 = 1{,}6 \dots 2{,}4)$$

$$U_S = z2 \times U_D \qquad (z2 = 0{,}5 \dots 0{,}7)$$

UD = Übermaß in der Dichtkontaktfläche
$\sigma$ 0,2 = Streckgrenze
E = Elastizitätsmodul
$U_S$ = Übermaß in der Stützkontaktfläche

**12.** Rohrverbindung nach einem der Ansprüche 9 bis 11,
**dadurch gekennzeichnet,**

**daß** die Abstände zwischen Dichtkontaktfläche (13) und Ende (10) des Zapfenelementes (2) einerseits und zwischen Dichtkontaktfläche (13) und Stützkontaktfläche (14) andererseits sowie zwischen Stützkontaktfläche (14) und Gewindeeinlauf (11) den folgenden Bedingungen genügent

$$L_{ID} = z3 \times U_D \times \sqrt{\frac{R_L}{S_L}} \qquad (z3 = 1,2 \dots 1,5)$$

$L_{ID}$ = Abstand Innenschulter - Dichtsitz
$S_L$ = mittlere Lippendicke

$$L_{DS} = z4 \times \sqrt{R_L \times S_L} \qquad (z4 = 0,5 \dots 0,8)$$

$L_{DS}$ = Abstand Dichtsitz - Stützkontakt

$$L_{SG} = z5 \times L_{DS} \qquad (z5 = 1,5 \dots 2,0)$$

$L_{SG}$ = Abstand Stützkontakt - Gewindeeinlauf

13. Rohrverbindung nach einem der Ansprüche 7 bis 12,
    **dadurch gekennzeichnet,**
    **daß** die Neigung des Kegels der geraden Kontaktfläche des Zapfenelementes (2) im Bereich zwischen 1:3 bis 1:5 liegt, die dann übergeht in eine dem Gewindeabschnitt (11) entsprechende Neigung.

14. Rohrverbindung nach Anspruch 13,
    **dadurch gekennzeichnet,**
    **daß** die Neigung des Kegels der geraden Kontaktfläche des Zapfenelementes (2) 1:4 beträgt.

15. Rohrverbindung nach einem der Ansprüche 1 bis 14,
    **dadurch gekennzeichnet,**
    **daß** die innere Schulter (3,10) als 90°-Schulter ausgebildet ist.

**Claims**

1. Tube connection, having a plug element (2) which has a tapered, externally threaded section between an outer shoulder and a plug face (10), and a non-threaded section between the outer shoulder and the externally threaded section, and between the externally threaded section and the plug face (10); and having a sleeve element which can be screwed together with the plug element and which has a tapered internally threaded section between an inner shoulder and a sleeve face (4), and a non-threaded section between the outer shoulder and the internally threaded section and between the internally threaded section and the sleeve face (4); the non-threaded sections, positioned opposite to each other when screwed down, of the plug element and sleeve element (1) in the area of the inner shoulder being of a different length from that of the non-threaded sections of the plug element and sleeve element in the area of the outer shoulder, **characterised**
   **in that** the outer shoulder (9) of the plug element (2), that comes into contact with the sleeve face (4) when they are screwed together, forms the primary shoulder, and the distance (18) between the plug face (10) and the outer shoulder (9) is less than the distance (17) between the sleeve face (4) and the inner shoulder (3) of the sleeve element (1):
   **in that** the non-threaded sections (19, 20) in the area of the inner shoulder (3) or plug face (10) are at least twice as long as the non-threaded sections (6, 12) in the area of the outer shoulder (9) or sleeve face (4), the non-threaded section (20) of the sleeve element (1) having a groove (7) and a sealing component (26), and the non-threaded area (15) of the plug element (2) closest to the plug face (10) coming, when screwed in, into contact with the sealing component (26) of the sleeve element, forming a metallic seal, the sealing component (26) having two contact surfaces (13, 14) axially separated from each other, the contact surface (13) that acts as the base of the seal being closer to, and the second contact surface (14) that provides a support function being further away from, the inner shoulder (3), and the groove (7) for the purpose of increasing elasticity being positioned between the threaded section (5) and the sealing component (26).

2. Tube connection as in Claim 1,
   **characterised in that**
   the non-threaded sections (19, 20) in the area of the inner shoulder (3) or plug face (10) are three times as long as the non-threaded sections (6, 12) in the area of the outer shoulder (9) or sleeve face (4).

3. Tube connection as in Claim 1 and 2,
   **characterised in that**
   the internally (5) and externally (11) threaded sections have a coarse-pitch standard thread, in which the load flank (25) has an angle range of 15 to 20°, and the leading flank (24) has an angle of 30°.

4. Tube connection as in Claim 3,
   **characterised in that**
   the load flank (25) has an angle of 18°.

5. Tube connection as in Claim 3 and 4,
   **characterised in that**
   the thread pitch falls within the range of 2.5 - 4 threads per inch.

**6.** Tube connection as in Claim 5,
**characterised in that**
the thread pitch is 3 threads per inch.

**7.** Tube connection as in one of Claims 3 to 6,
**characterised in that**
the taper of the threaded sections (5, 11) falls within the range of 1:4 and 1:8.

**8.** Tube connection as in Claim 7,
**characterised in that**
the taper of the threaded sections (5, 11) is 1:6.

**9.** Tube connection as in one of Claims 1 to 8,
**characterised in that**
the plug element (2) has, in the non-threaded section (19), a straight, angled contact surface, and the sleeve element (1) has two convex, crowned contact surfaces (13, 14) which operate in conjunction with it.

**10.** Tube connection as in Claim 9,
**characterised in that**
the radii of the crowned contact surfaces (13, 14) in the sleeve element (1) are greater than the average radius of the lip of the plug element (2), and the radius of the seal contact surface (13) is always smaller than that of the support.contact surface (14), and the following conditions are fulfilled:

$R_D$ = at least $1.25 \times R_L$
$R_S$ = approx. $2 \times R_D$

$R_D$ = radius of seal contact surface
$R_L$ = average radius of sealing lip
$R_S$ = radius of support contact surface

**11.** Tube connection as in one of Claims 9 and 10,
**characterised in that**
the overmeasure in the contact surfaces (13, 14) (difference between the diameters of the sleeve element (1) and the plug element (2)) is dependent on the material, the overmeasure in the support contact surface (14) always being less than that of the seal contact surface (13), and the following conditions are fulfilled:

$$U_D = z1 \times R_L \times \frac{\sigma 0.2}{E} \qquad (z1 - 1.6 \dots 2.4)$$

$$U_S = z2 \times U_D \qquad (z2 = 0.5 \dots 0.7)$$

$U_D$ = overmeasure in seal contact surface
$\sigma$ 0.2 = yield point
$E$ = elastic modulus
$U_S$ = overmeasure in support contact surface

**12.** Pipe connection as in one of Claims 9 to 11,
**characterised in that**
the distances between the sealing contact surface (13) and the end (10) of the plug element (2) on the one hand, and between the sealing contact surface (14) and the thread lead-in (11) on the other, fulfill the following conditions:

$$L_{ID} = z3 \times U_D \times \sqrt{\frac{R}{S}} \qquad (z3 = 1.2 \dots 1.5)$$

$L_{ID}$ = distance between inner shoulder and seal base
$S_L$ = average lip thickness

$$L_{DS} = z4 \times \sqrt{R \times S} \qquad (z4 = 0.5 \dots 0.8)$$

$L_{DS}$ = distance between seal base and support contact

$$L_{SG} = z5 \times L_{DS} \qquad (z5 = 1.5 \dots 2.0)$$

$L_{SG}$ = distance between support contact and thread lead-in.

**13.** Tube connection as in one of Claims 7 to 12,
**characterised in that**
the gradient of the taper of the straight contact surface of the plug element (2) falls within the range 1:3 to 1:5, and then changes into a gradient that corresponds to the threaded section (11).

**14.** Tube connection as in Claim 13,
**characterised in that**
the gradient of the taper of the straight contact surface of the plug element (2) is 1:4.

**15.** Tube connection as in one of Claims 1 to 14,
**characterised in that**
the inner shoulder (3, 10) is in the form of a 90° shoulder.

**Revendications**

**1.** Raccord de tubes, comportant un élément de tourillon (2) , qui présente un tronçon fileté extérieurement conique agencé entre un épaulement externe et une surface frontale de tourillon (10) et un tronçon sans filetage agencé entre l'épaulement externe et le tronçon fileté extérieurement, ainsi qu'un tronçon sans filetage agencé entre le tronçon fileté extérieurement et la surface frontale (10) du tourillon, et un élément de manchon pouvant être vissé avec l'élément de tourillon, qui présente un tronçon fileté intérieurement conique agencé entre un épaulement interne et une surface frontale de manchon (4) et un tronçon sans filetage agencé entre l'épaulement externe et le tronçon fileté intérieurement, ainsi qu'un tronçon sans filetage agencé entre le tronçon fileté intérieurement et la surface frontale (4) du manchon, les tronçons sans filetage, opposés l'un à l'autre dans l'état vissé, de l'élément de tourillon et de l'élément de manchon (1), dans la zone de l'épaulement interne, présentant une autre longueur que les tronçons sans filetage, se trouvant dans la zone de l'épaulement externe, de l'élément de tourillon et de l'élément de manchon,
**caractérisé en ce que** l'épaulement externe (9), venant en contact lors du vissage avec la surface frontale (4) du manchon, de l'élément de tourillon (2) forme l'épaulement primaire et la distance (18) entre la surface frontale (10) du tourillon et l'épaulement externe (9) est plus faible que la distance (17) entre la surface frontale (4) du manchon et l'épaulement interne (3) de l'élément de manchon (1), **en ce que** les tronçons sans filetage (19, 20) se trouvant dans la zone de l'épaulement interne (3) ou de la surface frontale (10) du tourillon sont au moins deux fois aussi longs que les tronçons sans filetage (6, 12) se trouvant dans la zone de l'épaulement externe (9) ou de la surface frontale (4) dû manchon, le tronçon sans filetage (20) de l'élément de manchon (1) présentant une rainure (7) et une partie d'étanchéité (26) et, dans l'état vissé, la zone (15) sans filetage, se trouvant la plus proche de la surface frontale (10) du tourillon, de l'élément de tourillon (2) venant en contact avec la partie d'étanchéité (26) de l'élément de manchon (1) et formant un joint étanche métallique, la partie d'étanchéité (26) étant munie de deux surfaces de contact (13, 14) écartées axialement l'une de l'autre, desquelles la surface de contact (13) servant comme siège d'étanchéité est agencée plus proche et la seconde surface de contact (14) exerçant un effet d'appui est agencée de façon plus éloignée par rapport à l'épaulement interne (3), et la rainure (7) prévue pour augmenter l'élasticité étant agencée entre le tronçon fileté (5) et la partie d'étanchéité (26).

2.  Raccord de tubes selon la revendication 1,
    **caractérisé en ce que** les tronçons sans filetage (19, 20) se trouvant dans la zone de l'épaulement interne (3) ou de la surface frontale (10) du tourillon sont trois fois aussi longs que les tronçons (6, 12) sans filetage se trouvant dans la zone de l'épaulement externe (9) ou de la surface frontale (4) du manchon.

3.  Raccord de tubes selon les revendications 1 et 2,
    **caractérisé en ce que** le tronçon fileté intérieurement (5) et le tronçon fileté extérieurement (11) sont munis d'un filetage standard grossier, dont le flanc de charge (25) présente une plage angulaire de 15 à 20° et le flanc de guidage (24) un angle de 30°.

4.  Raccord de tubes selon la revendication 3,
    **caractérisé en ce que** le flanc de charge (25) présente un angle de 18°.

5.  Raccord de tubes selon les revendications 3 et 4,
    **caractérisé en ce que** le pas de filetage se trouve dans la plage entre 2,5-4 spires/pouce.

6.  Raccord de tubes selon la revendication 5,
    **caractérisé en ce que** le pas de filetage vaut 3 spires/pouce.

7.  Raccord de tubes selon une des revendications 3 - 6,
    **caractérisé en ce que** le cône des tronçons filetés (5, 11) se trouve dans la plage entre 1:4 et 1:8.

8.  Raccord de tubes selon la revendication 7,
    **caractérisé en ce que** le cône des tronçons filetés (5, 11) vaut 1:6.

9.  Raccord de tubes selon une des revendications 1 à 8,
    **caractérisé en ce que** l'élément de tourillon (2), dans le tronçon sans filetage (19), présente une surface de contact droite s'étendant de façon inclinée et l'élément de manchon (1) présente deux surfaces de contact (13, 14) coopérant avec celle-ci, réalisées de façon bombée et convexe.

10. Raccord de tubes selon la revendication 9,
    **caractérisé en ce que** les rayons des surface de contact (13, 14) réalisés de façon bombée dans l'élément de manchon (1) sont plus grands que le rayon moyen de la lèvre de l'élément de tourillon (2) et le rayon de la surface de contact d'étanchéité (13) est toujours plus petit que celui de la surface de contact d'appui (14), et les conditions suivantes sont remplies :

    $$R_D = \text{au moins } 1{,}25\text{x } R_L$$

    $$R_S = \text{ca.2 x } R_D$$

    $R_D$ = rayon de la surface de contact d'étanchéité

    $R_L$ = rayon moyen de la lèvre d'étanchéité

    $R_S$ = rayon de la surface de contact d'appui

11. Raccord de tubes selon une des revendications 9 et 10,

**caractérisé en ce que** la surmesure dans les surfaces de contact (13, 14) (différence de diamètre élément de manchon (1)-élément de tourillon (2)) dépend de la matière, la surmesure dans la surface de contact d'appui (14) étant toujours plus petite que celle de la surface de contact d'étanchéité (13), et les conditions suivantes sont remplies :

$$U_D = z1 \times R_L \times \frac{\sigma 0,2}{E} \qquad (z1 = 1,6 \dots 2,4)$$

$$U_S = z2 \times U_D \qquad (z2 = 0,5 \dots 0,7)$$

$U_D$ = surmesure dans la surface de contact d'étanchéité

$\sigma\,0,2$ = limite élastique

$E$ = module d'élasticité

$U_S$ = surmesure dans la surface de contact d'appui

12. Raccord de tubes selon une des revendications 9 à 11, **caractérisé en ce que** les distances entre la surface de contact d'étanchéité (13) et l'extrémité (10) de l'élément de tourillon (2), d'une part, et entre la surface de contact d'étanchéité (13) et la surface de contact d'appui (14), d'autre part, ainsi qu'entre la surface de contact d'appui (14) et l'entrée filetée (11) satisfont les conditions suivantes :

$$L_{ID} = z3 \times U_D \times \sqrt{\frac{R_L}{S_L}} \qquad (z3 = 1,2 \dots 1,5)$$

$L_{ID}$ = distance épaulement interne-siège d'étanchéité
$S_L$ = épaisseur moyenne de lèvre

$$L_{DS} = z4 \times \sqrt{R_L \times S_L} \qquad (z4 = 0,5 \dots 0,8)$$

$L_{DS}$ = distance siège d'étanchéité-contact d'appui

$$L_{SG} = z5 \times L_{DS} \qquad (z5 = 1,5 \dots 2,0)$$

$L_{SG}$ = distance contact d'appui-entrée filetée

13. Raccord de tubes selon une des revendications 7 à 12, **caractérisé en ce que** l'inclinaison du cône de la surface de contact droite de l'élément de tourillon (2) se trouve dans la plage entre 1:3 et 1:5, qui se convertit alors en une inclinaison correspondant au tronçon fileté (11).

14. Raccord de tubes selon la revendication 13, **caractérisé en ce que** l'inclinaison du cône de la surface de contact droite de l'élément de tourillon (2) vaut 1:4.

15. Raccord de tubes selon une des revendications 1 à 14, **caractérisé en ce que** l'épaulement interne (3, 10) est réalisé comme épaulement à 90°.

Fig.1A

Fig.1B

## Fig. 2